# EUROPEAN PATENT APPLICATION

(11) **EP 1 787 524 A2**
(43) Date of publication of application: **23.05.2007**
(21) Application number: 06124224.4
(22) Date of filing: 16.11.2006
(51) Int. Cl.: A23G 9/04, A23G 9/28

(54) **Machine for producing and dispensing ice cream frappés or shakes**

(30) Priority: 22.11.2005 IT BO20050705
(71) Applicant: Ali SpA, 20123 Milano (IT)
(72) Inventor: Cocchi, Gino, 40137, Bologna (IT); Zaniboni, Gianni, 40037, Borgonuovo di Sasso Marconi (Bolo (IT)
(74) Representative: Ghioni, Carlo Raoul Maria

(57) **Abstract**

A machine for producing and dispensing ice cream frappés or shakes comprises a unit (5) for producing neutral ice cream and a unit (23) for mixing the neutral ice cream with a flavouring syrup; the mixing unit (23) consists of a cylindrical chamber (14) leading into a truncated cone-shaped chamber (15) with a rotor (20) which whips and mixes the neutral ice cream with the flavouring syrup; a piston (18) slides in the cylindrical chamber (14), dosing the ice cream and the syrup, which is fed into the cylindrical chamber (14) by feed means (30) comprising a syrup container (31), a hose (32), a peristaltic pump (35) acting along the hose (32) and a lip valve (47); the hose (32) and the peristaltic pump (35) being positioned in the machine (1) base (2).

## Description

The present invention relates to a machine for producing and dispensing ice cream frappés or shakes.

The term "ice cream frappé" or "shake" is used here to refer to any frozen or partially frozen food product with a neutral flavour, hereinafter referred to as neutral ice cream, whipped with a syrup which has the desired flavour and which may have the soft parts of fruit flesh or solids such as seeds and the like added to it.

A known machine of the above-mentioned type comprises a section for production of the neutral ice cream, connected to a mixing unit by a pipe. At least one such syrup is fed into the mixing unit by feed means.

Again as is known, for each syrup the feed means comprise a container, a pipe and an injector for feeding to the above-mentioned feed unit.

Along each pipe there is also a gear pump for feeding the syrup to the injector through valve means.

In other machines of the known type each syrup is also subjected to a predetermined pressure in the container.

In this way, when the relative valve means, consisting of a solenoid valve operated by a control unit, open the syrup is fed to the mixing unit without using a pump.

However, the known syrup feed means have several disadvantages. These relate firstly to hygiene and are the result of difficulty removing from the mechanical components of pumps any solid particles, consisting for example of fragments of fruit, seeds and the like, contained in the syrups.

Secondly, gear pump operation may not be uniform depending on the type of syrup handled.

It should also be noticed that the solenoid valves are also subject to the same disadvantages in terms of hygiene.

Finally, it should be noticed that the known type of feed means are too expensive relative to the performance provided.

The aim of the present invention is therefore to overcome the above-mentioned disadvantages by producing a machine for producing and dispensing ice cream frappés which is free of the disadvantages described above.

Accordingly, the present invention achieves this aim with a machine for producing and dispensing ice cream frappés which has the characteristics described in one or more of the claims herein.

The technical features of the invention, in accordance with the afore-mentioned aims, are clearly indicated in the claims herein and the advantages of the invention are more apparent in the detailed description which follows, with reference to the accompanying drawings, which illustrate a preferred embodiment without limiting the scope of the invention, in which:
- Figure 1 is a schematic perspective view of a machine for producing and dispensing ice cream frappés or shakes in accordance with the present invention;
- Figures 2 and 3 are cross-sections of the side view of a detail from Figure 1, in two different operating conditions;
- Figure 4 is a perspective view with some parts cut away and others exploded, of a detail from Figures 1, 2 and 3;
- Figure 5 is a perspective view of a detail from Figure 4.

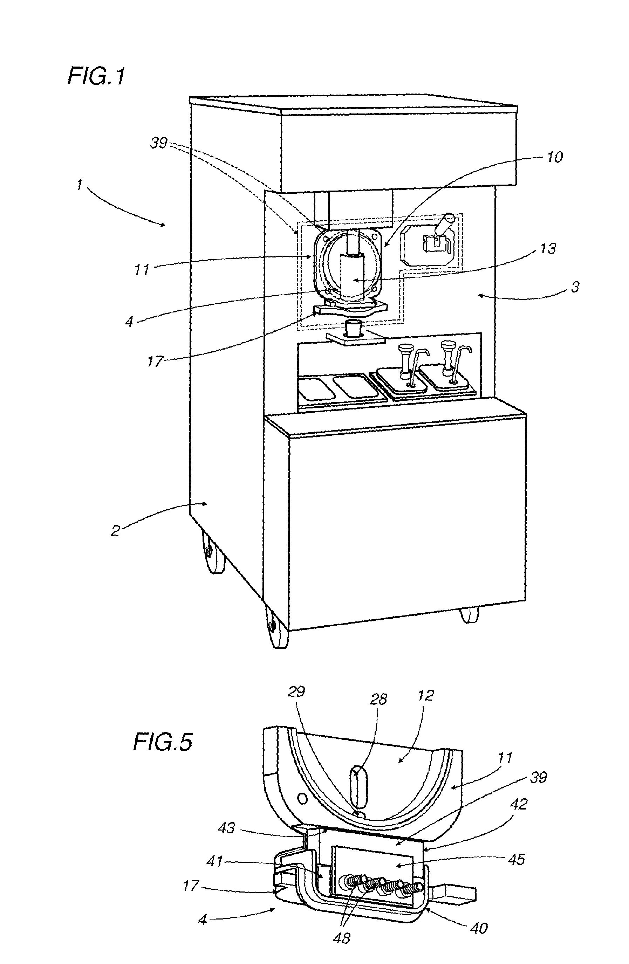

With reference to Figures 1, 2 and 3, the numeral 1 denotes as a whole a machine for producing and dispensing ice cream frappes or shakes, consisting of neutral ice cream with the addition of flavouring syrup.

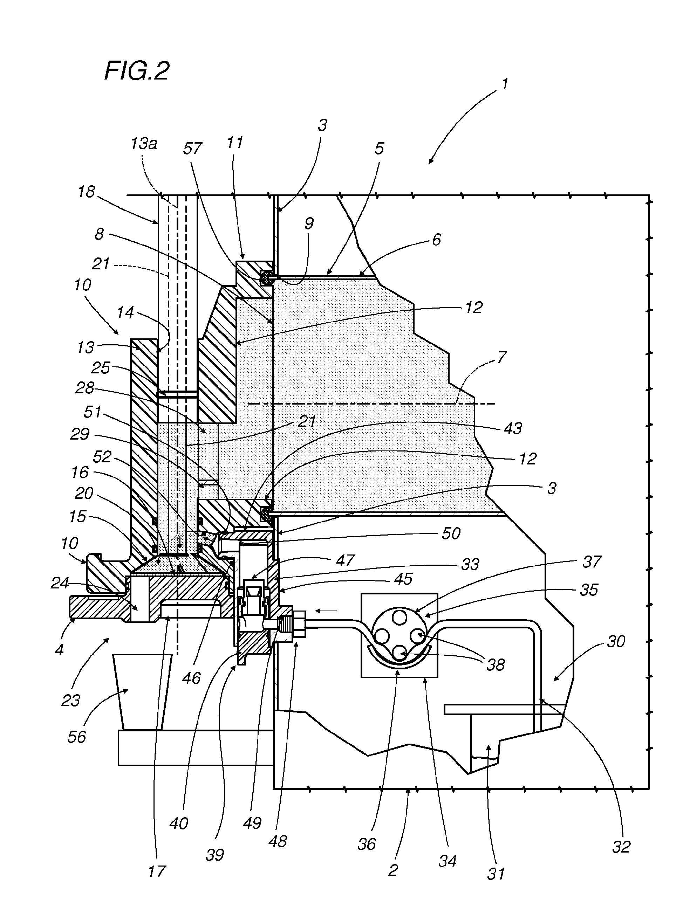

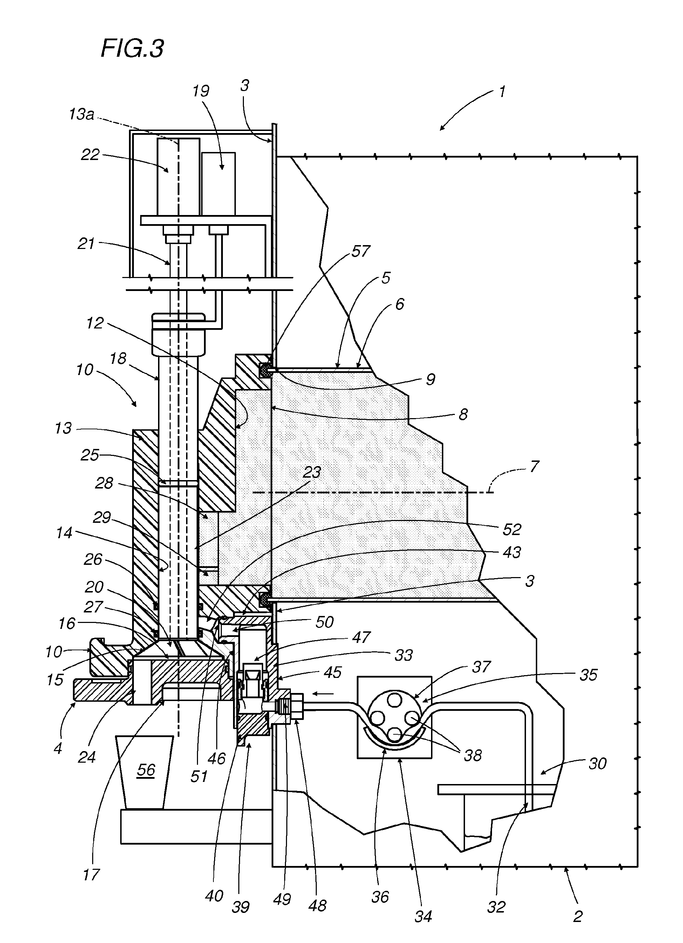

The machine 1 comprises a box-shaped base 2, substantially having the shape of a parallelepiped, of which Figures 2 and 3 illustrate a front portion delimitated by a vertical front wall 3, where dispensing means 4 for predetermined doses of frappe or shake are positioned.

Inside the base 2 there is an ice cream producing unit 5 of the known type.

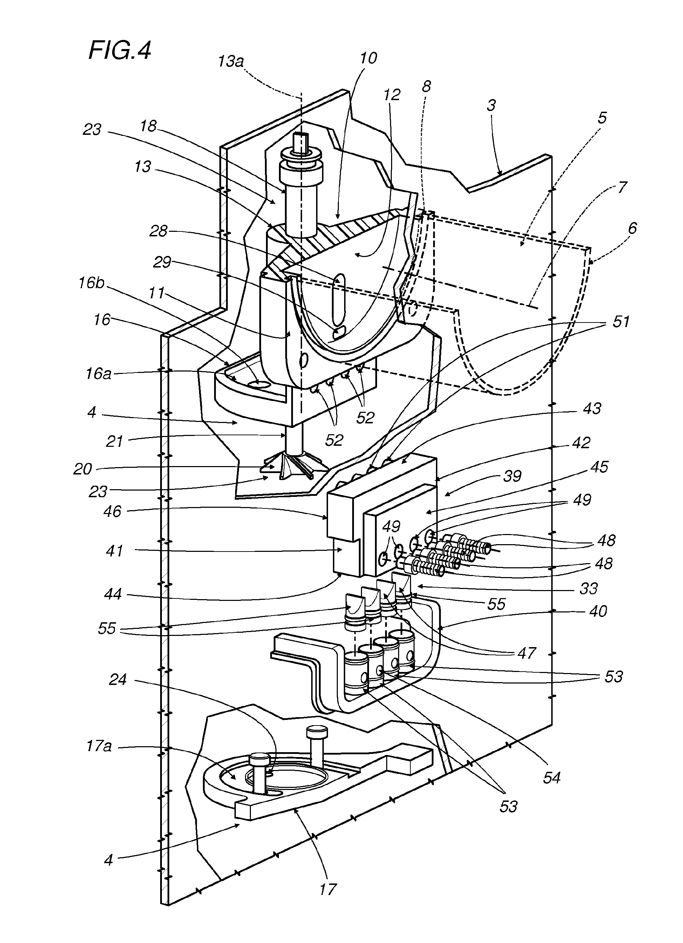

As illustrated also in Figure 4, the unit 5 comprises a cylindrical body 6, defined the whipping and freezing cylinder, with a horizontal axis 7 normal to the front wall 3 and supported, in the known way not illustrated, by the base 2.

An open end 8 of the cylindrical body 6 is positioned at a circular opening 9 in the front wall 3. On the outer face of the front wall 3, at the circular opening 9, there is a block or door 10, comprising a substantially square plate 11, fixed in contact with the front wall 3 and forming, with its cup-shaped central portion, a lid 12 which seals closed the open end 8 of the cylindrical body 6.

In a substantially cylindrical portion 13 with vertical axis 13a of the door 10, positioned on the opposite side of the lid 12, there is a cavity for receiving the neutral ice cream and the syrup, having a cylindrical chamber 14 whose axis coinciding with the axis 13a is coplanar with the axis 7 of the cylindrical body 6.

Below the cylindrical chamber 14 in the door 10 there is a truncated cone-shaped chamber 15 (Figures 2, 3), closed at the bottom by a horizontal wall 16 which is part of a closing block 17 described in more detail below.

Inside the cylindrical chamber 14 a piston 18 slides, operated by actuator means 19 supported by the front wall 3 and able to move between an upper end of stroke position illustrated in Figure 2 and a lower end of stroke position, illustrated in Figure 3, until it is close to the inlet of the truncated cone-shaped chamber 15.

Inside the truncated cone-shaped chamber 15, defined the mixing chamber, there is a rotor 20 operated by a shaft 21 coaxial with the cylindrical chamber 14, passing through the piston 18 and driven to rotate about its axis by actuator means 22 supported by the front wall 3.

The cylindrical chamber 14, also called the chamber for receiving the neutral ice cream and the syrup, the truncated cone-shaped chamber 15, together with the piston 18 and the rotor 20, form a mixing unit labelled 23 as a whole and which is part of the door 10.

As illustrated in Figures 2, 3 and 4, the closing block 17 is fixed in a removable way to the block 10 and has a through-hole 24 defined the dispensing hole which puts the mixing chamber 15 in communication with the outside for dispensing the frappé or shake.

The piston 18 slides in the cylindrical chamber 14 with three O-Rings inserted between it and the chamber, in respective seats and labelled 25, 26 and 27 from top to bottom.

Two pipes 28 and 29 lead into the cylindrical chamber 14, in the zone between the rings 25 and 26. These pipes pass through the plate 11 and communicate with the inside of the cylindrical whipping and freezing body 6 to feed the ice cream to the mixing unit 23.

Inside the base 2, below the cylindrical whipping and freezing body 6, there are means for feeding flavouring syrup, labelled 30 as a whole.

As illustrated in Figures 2, 3 and 4, for each syrup the feed means 30 comprise a container 31, a flexible plastic hose 32 and valve means 33 connected to the container 31 by the hose 32.

Along the hose 32 there are pump means 34 consisting of a peristaltic pump 35 of the known type, comprising a curved seat 36 for passage of the hose 32 and a rotor 37 with rollers 38 acting one after another on the hose 32 during rotation of the rotor 37.

The valve means 33 are housed in a box-shaped body 39 substantially a parallelepiped inserted below the door 12 between the block 17, the lower end of the block 10 and the wall 3, to which it is fixed.

As Figure 5 also shows, the box-shaped body 39 is laterally defined by two walls 41, 42 vertical and transversal to the wall 3. It is defined at the top by a wall 43, and at the bottom by a wall 44 formed by the lower part of a support labelled 40 as a whole. Towards the inside and the outside of the base 2 it is defined by two walls, labelled 45 and 46 and substantially parallel with the wall 3.

The upper wall 43 and the outer wall 46 are respectively in contact with the lower end of the door 12 and with the block 17.

In particular, as shown in Figure 5, the block 17, in its closed position, locks the support 40. This means that by moving the block 17 to its open position, it is possible to remove the support 40 and disassemble the valve means 33 contained in the box-shaped body 39, for cleaning, in a very simple way.

Moreover, as illustrated in Figure 4, the horizontal wall 16, which is part of the closing block 17, has on its surface facing the substantially cylindrical portion 13 of the door 10, a tray 16a for collecting condensation created during production of ice cream frappés or shakes. Through a hole 16b made in the base of the tray 16a, the condensation runs into a conveyor channel 17a made in the upper wall of the block 17 and is conveyed into contact with the front wall 3.

To allow good evaporation of the condensation, the wall 3 has an electric heating element 3a schematically illustrated with a dashed line in Figure 1, which is connected to an electric power source not illustrated and allows the wall 3 to reach a temperature which allows said evaporation.

The valve means 33, relative to the feed means for each syrup (four in the example in Figure 4) are positioned alongside and parallel with the walls 45 and 46 and consist of lip valves 47 connected at the inlet to the hoses 32 with respective connectors 48 inserted in respective holes 49 in the wall 45 in contact with the wall 3, and connected at the outlet, through respective holes 50 in the wall 46 and respective connectors 51 passing through pipes 52 made in the wall 46 of the box-shaped body 39.

More precisely, each lip valve 47 (of the known type) comprises a cylindrical container 53 with a hole 54 for connection to the connector 32.

Inserted in a sealed way in each cylindrical container 53 there is a valve element 55 made of elastic material and having a unidirectional outlet. Therefore it should be noticed that the hoses 32 and the connectors 48 are completely positioned in the machine 1 base 2.

Finally, it should be noticed that the block or door 10 comprising the plate 11 is mounted in a removable way on the wall 3 with a sealing ring 57 inserted between them, in contact with the open end of the cylindrical body 6, whilst the block 39 is jointed to the front wall 3.

In practice, with the piston 18 in the upper end of stroke position, the neutral ice cream produced in the whipping and freezing cylinder 6 flows through the two pipes 28 and 29 into the cylindrical chamber 14 (Figure 2). At the same time the peristaltic pump 35 feeds a flavouring syrup through the relative lip valve 47 and the pipe 52, into the cylindrical chamber 14.

It should be noticed that the hose 32, the peristaltic pump 35 and the relative lip valve 47 are positioned on the same side relative to the mixing unit 23, in the base 2.

Under the pushing action of the piston 18 during its downstroke, the neutral ice cream and the relative syrup flow into the truncated cone-shaped chamber 15 in which they are whipped and mixed by the rotor 20 and, through the dispensing hole 24, they are together dispensed to a cup or container 56 for consumption, in a predetermined dose.

It should be noticed that use of the feed means 30 for the syrups, in accordance with the present invention eliminates the disadvantages in terms of hygiene encountered in the prior art. Moreover, the gears of the pumps in contact with the products of which the syrups consist are also eliminated and use of such pumps is not influenced by the type of syrup used. Finally, the fact that the hose 32, the peristaltic pump 35 and the relative lip valve 47 are positioned on the same side relative to the mixing unit 23 and inside the base 2, contributes to greater machine hygiene and avoids visible external hoses.

It should also be noticed that a machine equipped with such feed means is more economical and requires less maintenance and cleaning.

Compared with prior art machines, such a machine is more compact and at the same time easy to disassemble for maintenance or cleaning.

If the base 2 has at least one window made of a transparent material, the operator can easily inspect the inside of the machine disclosed.

It should be noticed that, in order to be able to directly control the mixing steps, the door 10, the box-shaped body 39, the support 40 and the cylindrical containers 53 which house the lip valves 47, may be made of a transparent material.

The invention described has evident industrial applications and may be modified and adapted without thereby departing from the scope of the inventive concept. Moreover, all details of the invention may be substituted by technically equivalent elements.

## Claims

1. A machine for producing and dispensing ice cream frappés or shakes, comprising a unit (5) for producing neutral ice cream, feed means (30) for at least one flavouring syrup comprising a syrup container (31), a hose (32) and valve means (33), the machine (1) also comprising a unit (23) for mixing the ice cream with the syrup, the machine being **characterised in that** the feed means (30) comprise a peristaltic pump (35) along the hose (32).

2. The machine according to claim 1, **characterised in that** the valve means (33) consist of a lip valve (47).

3. The machine according to claim 2, wherein the mixing unit (23) comprises a chamber (14) for receiving the neutral ice cream and the syrup, a mixing chamber (15) and a piston (18) for feeding doses from the receiving chamber (14) to the mixing chamber (15), **characterised in that** the lip valve (47) is inserted between the hose (32) and the receiving chamber (14).

4. The machine according to any of the foregoing claims from 1 to 3, **characterised in that** the container (31), the hose (32) and the peristaltic pump (35) are positioned in a machine (1) base (2).

5. A machine for producing and dispensing ice cream frappés, comprising a unit (5) for producing neutral ice cream, means (30) for feeding at least one flavouring syrup comprising a syrup container (31), a hose (32) and valve means (33), the machine (1) also comprising a unit (23) for mixing the ice cream with the syrup, made in a block or door (10), **characterised in that** the feed means (30) for each syrup comprise a peristaltic pump (35) along the hose (32), acting on the hose (32), and a lip valve (47); the hose (32), peristaltic pump (35) and lip valve (47) being positioned on the same side relative to the mixing unit (23).

6. The machine according to claim 5, **characterised in that** the valve means (33) are contained in a box-shaped body (39) integral with a front wall (3) of the base (2) and are connected to respective hoses (32) in the base (2) at the wall (3).

7. The machine according to claims 5 and 6, **characterised in that** the box-shaped body (39) is inserted between the wall (3) and the lower end of the door (10).

8. The machine according to any of the foregoing claims from 5 to 7, **characterised in that** the block or door (10) is mounted in a removable way on the wall (3) so as to make the inlet of the cylindrical body (6) and the box-shaped body (39) containing the valve means (33) accessible.

9. The machine according to any of the foregoing claims from 5 to 8, **characterised in that** the block (39) is mounted so that it is integral with the front wall (3).

10. The machine according to any of the foregoing claims from 5 to 9, **characterised in that** the door (10), the valve means (33) and the box-shaped body (39) are made of a transparent material.

11. The machine according to any of the foregoing claims from 6 to 10, **characterised in that** the front wall (3) comprises an electric heating element (3a) for heating the wall.
